# EUROPEAN PATENT SPECIFICATION

(11) **EP 1 904 929 B1**
(45) Date of publication and mention of the grant of the patent: **26.11.2014**
(21) Application number: 05772268.8
(22) Date of filing: 03.08.2005
(51) Int. Cl.: G06F 12/14, G06F 12/12, G06F 21/62, G06Q 20/34, H04M 1/725, G07F 7/10

(54) **SYSTEM AND METHOD FOR MANAGING MEMORY IN A MOBILE DEVICE**
SYSTEM UND VERFAHREN ZUR SPEICHERVERWALTUNG IN EINEM MOBILEN GERÄT
SYSTEME ET PROCEDE POUR LA GESTION DE MEMOIRE DANS UN DISPOSITIF MOBILE

(30) Priority: 24.06.2005 US 693412 P
(43) Date of publication of application: 02.04.2008
(73) Proprietor: BlackBerry Limited, Waterloo, ON N2K 0A7 (CA)
(72) Inventor: BROWN, Michael, S., Waterloo, Ontario N2K 4B1 (CA); BROWN, Michael, K., Kitchener, Ontario N2M 2Z2 (CA); KIRKUP, Michael, G., Waterloo, Ontario N2J 4Y3 (CA); ADAMS, Neil, P., Waterloo, Ontario N2K 4E4 (CA); LITTLE, Herbert, A., Waterloo, Ontario N2T 2V8 (CA)
(74) Representative: Moore, Barry
(86) International application number: PCT/CA2005/001207
(87) International publication number: WO 2006/135999

(56) References cited:
- GB-A- 2 276 965
- US-A- 5 784 459
- VIEGA J.: 'Protecting Sensitive Data in Memory', [Online] XP003007047 Retrieved from the Internet: <URL:http://www.cgisecurity.com/lib/protect ing-sensitive-data.html>
- GARFINKEL ET AL.: 'Data Lifetime is a System Problem' 11TH ACM SIGOPS EUROPEAN WORKSHOP, [Online] 21 September 2004, XP003007048 Retrieved from the Internet: <URL:http://www.cs.kuleuven.ac.be/conferenc e/SIGPSEW04/program.html>
- GARFINKEL ET AL.: 'Data Lifetime is a Systems Problem', [Online] XP003007049 Retrieved from the Internet: <URL:http://www.footstool.stanford.edu/~jch ow/papers/sigops04/abstract.html>

## Description

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### Field of the Invention

Embodiments of the invention relate generally to the management of non-volatile memory in a mobile device, and more specifically to a system and method for managing memory to prevent the swapping out of sensitive data to non-volatile storage.

### Background of the Invention

Confidential or otherwise sensitive data is commonly stored on computing devices. Such data may include the contents of certain e-mail messages, contact information, and scheduler information associated with a user, for example. Passwords, shared secrets used in establishing or maintaining secure communication channels, and cryptographic keys, for example, may also be considered sensitive. For larger computing devices such as desktop computers, physical safeguards may be implemented to prevent unauthorized access to the computing devices themselves, and accordingly, the data therein. However, handheld or mobile devices might be considered less secure, since they are more likely to be lost or stolen by virtue of their relatively small size. As a result, it is often desirable to protect sensitive data on mobile devices in order to prevent unauthorized parties from accessing such information, particularly after the devices are lost or stolen.

Most computing devices typically utilize or have access to both volatile and non-volatile storage. For example, on a personal computer, volatile storage may be provided as Random Access Memory (RAM), while non-volatile storage may be provided by a hard disk. On a mobile device, volatile storage may be provided as RAM, while non-volatile storage may be provided as flash memory. Some computing devices are adapted to implement virtual memory, in which data or instructions stored in RAM, for example, can be swapped out to a non-volatile storage component in order to temporarily free up space in RAM. In this way, the non-volatile storage component may appear to extend the storage capacity of RAM, which is typically available in a more limited quantity in a computing device relative to available non-volatile storage.

Whenever data is written to a non-volatile storage medium, however, it will persist on that medium until it is overwritten, even if power to that medium is lost. An attacker could potentially access data on the medium that has not yet been overwritten (e.g. after a loss of power). Accordingly, if sensitive data is written, even temporarily, to a non-volatile storage component, this may present a security risk.

US5784459 discloses a method for providing a network computer with secure remote swapping to avoid transmitting active memory resident entities containing sensitive data in the clear. When a memory resident entity is created, it is entered in a table of secure entities if it requires security. The memory manager of the network computer checks the table for an entity before swapping it out to a network server. If the entity is in the table, the memory manager encrypts the contents of the entity.

Viega J: "Protecting Sensitive Data in Memory" discloses a non-swap our principle for protecting sensitive data whereby pages containing sensitive data are locked in memory to prevent any sensitive data stored in said pages being swapped out.

Garfinkel et al: "Data Lifetime is a Systems Problem" discusses how propagation and duration in memory of sensitive data increases the risk of exposure of that data.

### GENERAL

Embodiments of the invention are generally directed to a system and method for managing memory in a mobile device to prevent the swapping out of sensitive data to non-volatile storage, in order to eliminate such security risks.

In one broad aspect, there is provided a method of managing memory in a mobile device to prevent the swapping out of sensitive data to non-volatile storage during the execution of one or more programs on the mobile device, the method comprising the steps of: identifying one or more data objects stored in a volatile memory on the mobile device to be swapped out to a non-volatile storage component; determining a first subset of the one or more data objects, wherein each data object belonging to the first subset has been marked as containing sensitive data and attribute data has been stored in the data object to protect the data stored in the data object from being swapped out of the volatile memory; and retaining the first subset of data objects in the volatile memory of the mobile device, such that the first subset of data objects is not swapped out to the non-volatile storage component when a memory management component on the mobile device attempts to swap out one or more data objects of the first subset from the volatile memory to the non-volatile storage component.

In another broad aspect, there is provided a system for managing memory in a mobile device to prevent the swapping out of sensitive data to non-volatile storage during the execution of one or more programs on the mobile device, the system comprising: a processor; a volatile memory coupled to the processor; a non-volatile storage component coupled to the processor; a memory management component that controls the swapping of data objects between the volatile memory and the non-volatile storage component during the execution of the one or more programs by the processor; wherein the memory management component is adapted to perform the method of the invention.

### Brief Description of the Drawings

For a better understanding of embodiments of the systems and methods described herein, and to show more clearly how they may be carried into effect, reference will now be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a high-level block diagram illustrating a number of components of a system that includes addressable memory;
FIG. 5A is a flowchart illustrating steps in an embodiment of a method of managing memory;
FIG. 5B is a flowchart illustrating steps in another embodiment of a method of managing memory; and
FIG. 5C is a flowchart illustrating steps in another embodiment of a method of managing memory.

### Detailed Description

Embodiments of the systems and methods described herein may be applied to mobile stations. A mobile station is a two-way communication device with advanced data communication capabilities having the capability to communicate with other computer systems, and is also referred to herein generally as a mobile device. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

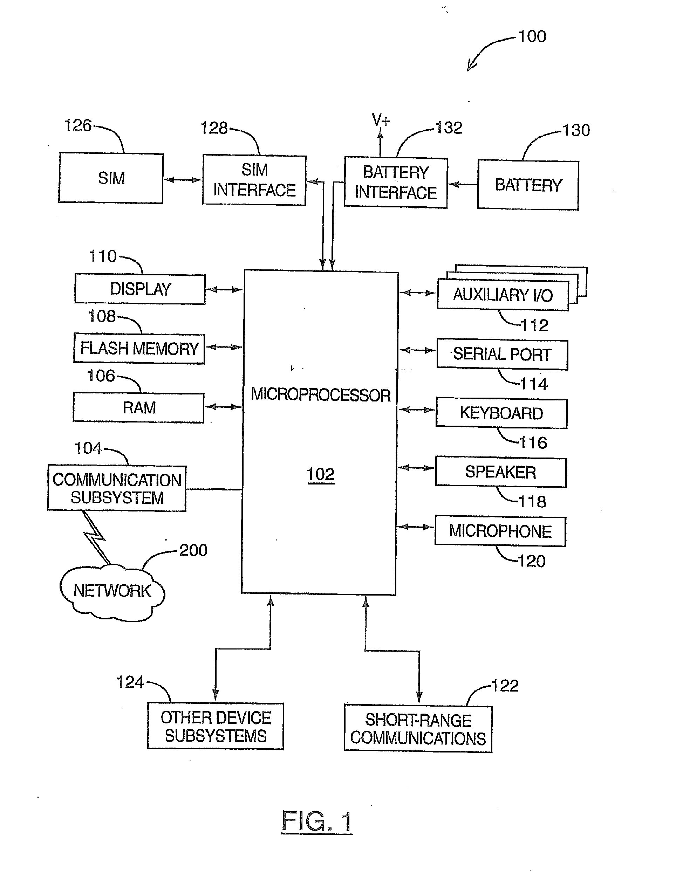

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications 122 and other devices 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent (non-volatile) store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 requires a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services could include: web browsing and messaging such as e-mail, voice mail, Short Message Service (SMS), and Multimedia Messaging Services (MMS). More advanced services may include: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 is a battery-powered device and includes a battery interface 132 for receiving one or more rechargeable batteries 130. Battery interface 132 is coupled to a regulator (not shown), which assists battery 130 in providing power V+ to mobile device 100. Although current technology makes use of a battery, future technologies such as micro fuel cells may provide the power to mobile device 100.

Microprocessor 102, in addition to its operating system functions, enables execution of software applications on mobile device 100. A set of applications that control basic device operations, including data and voice communication applications, will normally be installed on mobile device 100 during its manufacture. Another application that may be loaded onto mobile device 100 would be a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 is an alphanumeric keyboard and/or telephone-type keypad. A composed item may be transmitted over network 200 through communication subsystem 104.

For voice communications, the overall operation of mobile device 100 is substantially similar, except that the received signals would be output to speaker 118, and signals for transmission would be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

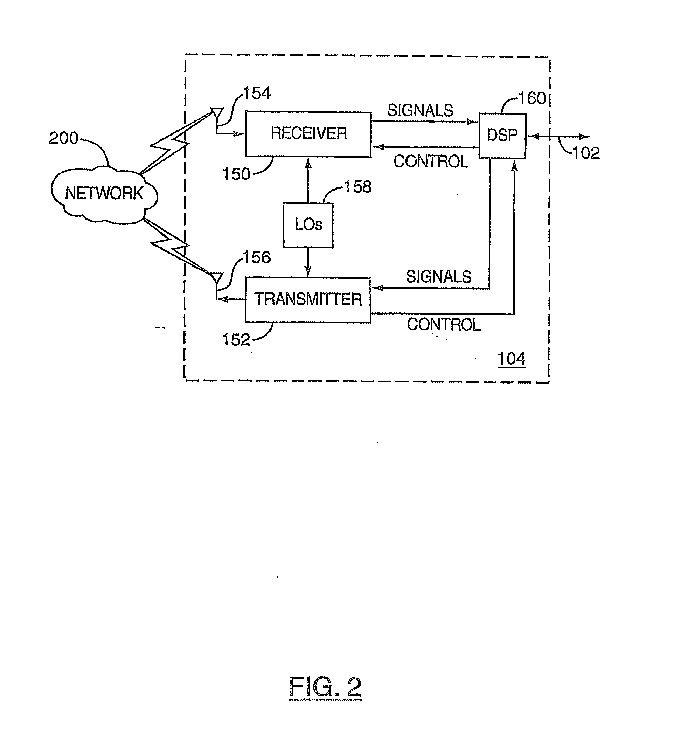

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 is typically keyed or turned on only when it is sending to network 200 and is otherwise turned off to conserve resources. Similarly, receiver 150 is periodically turned off to conserve power until it is needed to receive signals or information (if at all) during designated time periods.

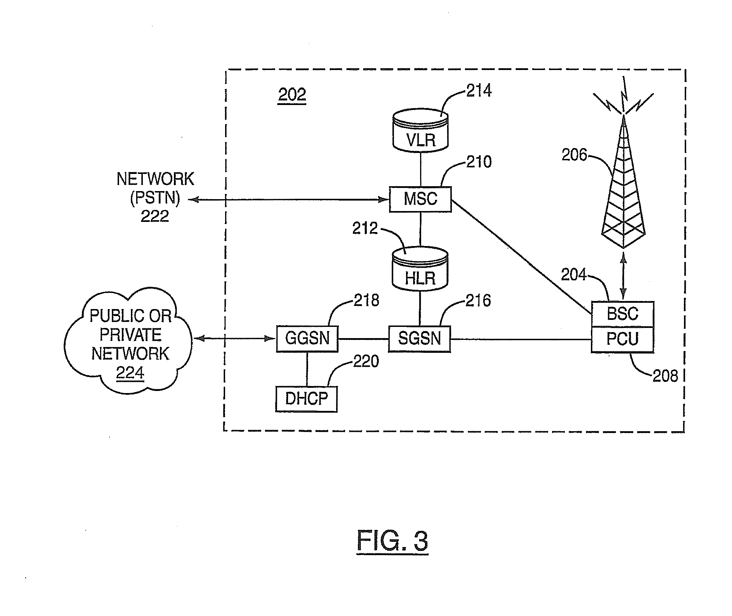

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Described herein are embodiments of systems and methods for managing memory in a mobile device to prevent the swapping out of sensitive data to non-volatile storage, in order to provide enhanced security against unauthorized access of such data. In the specification and in the claims, the terms "storage", "store", "storage component" and "memory" may be used interchangeably. It will be understood that each of these terms is not to be restricted to define implementations consisting of a single physical component or device. Multiple physical components or devices may collectively provide a "memory" or a "storage component", for example.

By preventing sensitive data from being swapped out, even temporarily, from volatile memory on a mobile device to non-volatile storage, an attacker would be unable to access sensitive data that might otherwise be left stored on the non-volatile storage. In cases where sensitive data is swapped out to non-volatile storage, sensitive data may become accessible to the attacker either because power to the mobile device was lost before the data could be swapped back to volatile memory, or because the data was not properly erased or overwritten after being deleted or swapped back to volatile memory, for example.

Embodiments of the systems and methods described herein can be applied to many types of sensitive data. For example, as user passwords are entered, they could be stored in non-swappable objects so that the password data is never written to non-volatile storage. Shared secrets used in establishing or maintaining secure communication channels may be stored in these objects. Similarly, cryptographic keys and secure data streamed from a server such as highly sensitive communications, for example, could be stored in these objects. In all of these cases, an attacker would be unable to read the sensitive data from non-volatile storage, since it would never be stored there.

In these embodiments, sensitive data stored in a volatile memory of a mobile device, such as RAM 106 of FIG. 1 for example, is prevented from being swapped out to a non-volatile storage component, such as flash memory 108 of FIG. 1, or other non-volatile storage components such as a hard drive, or removable memory such as a USB stick, for example. This technique can be contrasted to techniques employed in prior art systems that permit sensitive data to be swapped out from a volatile memory to a non-volatile storage component, but where the data is processed so that it only exists on the non-volatile storage component in an encrypted form. While such prior art systems may address the same security concerns as the embodiments described herein, the encryption and decryption of data being performed as data is being swapped between the volatile and non-volatile storage components will typically require a significant amount of processing. This additional processing may be more effectively handled on desktop or laptop computing systems, but may not be desirable to be performed on mobile devices given their generally unique resource constraints, such as battery life, for example.

Furthermore, in at least one example embodiment, sensitive data is not encrypted even while in volatile memory. Therefore, the attacker could attempt to read the sensitive data from volatile memory if it is still stored there, but this is typically more difficult due to the volatility of the medium and the fact that as soon as power is lost to the volatile memory, the data is no longer available. Accordingly, there is a potential tradeoff between the risk of a security breach with respect to sensitive data stored in volatile memory and the benefit of more efficient processing, as the sensitive data is not subject to encryption while in volatile or in non-volatile storage in such embodiments.

In accordance with another aspect of the example embodiments described herein, sensitive data that is to be prevented from being swapped out from a volatile memory (e.g. RAM) to a non-volatile storage component can be stored in an object or record marked as containing sensitive data. This allows data processing components adapted to perform virtual memory management functions on data stored in volatile memory to identify the so-marked objects or records as "not-to-be-swapped" or "RAM-only", for example. In accordance with these embodiments, data can be prevented from being swapped out to non-volatile storage, managed at the object level. This may provide greater flexibility to application developers ("programmers") who construct source code for programs to be executed on mobile devices, as the programmers can define in their code what data should be protected from being swapped out at run-time to a non-volatile storage component, by enforcing that such data is to be stored in objects marked as containing sensitive data.

This approach can be contrasted with prior art systems where specific regions or blocks of a volatile memory are allocated as being "non-swappable", and where sensitive data is stored in those regions so that it can be safeguarded from being swapped out to a non-volatile memory. In some of these prior art systems, the size of the specific "non-swappable" regions in memory is fixed prior to run-time, which may be considered as a relatively less efficient and less flexible solution. In some other of these prior art systems, "non-swappable" blocks can be dynamically allocated during the execution of a program. However, this may require that a programmer write source code that explicitly calls functions to assign specific address blocks as "non-swappable", which may be relatively more complicated to implement.

The ability, in the writing of source code, to define objects that can be marked as for containing sensitive data (irrespective of whether sensitive data will actually be stored in the object at run-time or not) is less complicated to implement from a programmer's perspective. Protecting sensitive data at the object level may be more intuitive, particularly where the source code is being written in an object-oriented programming language where properties such as inheritance can be used to automatically mark the appropriate data.

Mobile devices generally have limited storage capabilities. They generally have less physical memory than personal computers, and lack hard drives for persistent storage of large pieces of data and for supplementing physical memory with virtual memory. As the total storage capacity of a mobile device is typically much less than that of a larger computing device such as a desktop or laptop computing device, operating system software designed for execution on mobile devices is not typically adapted to provide virtual memory management capabilities.

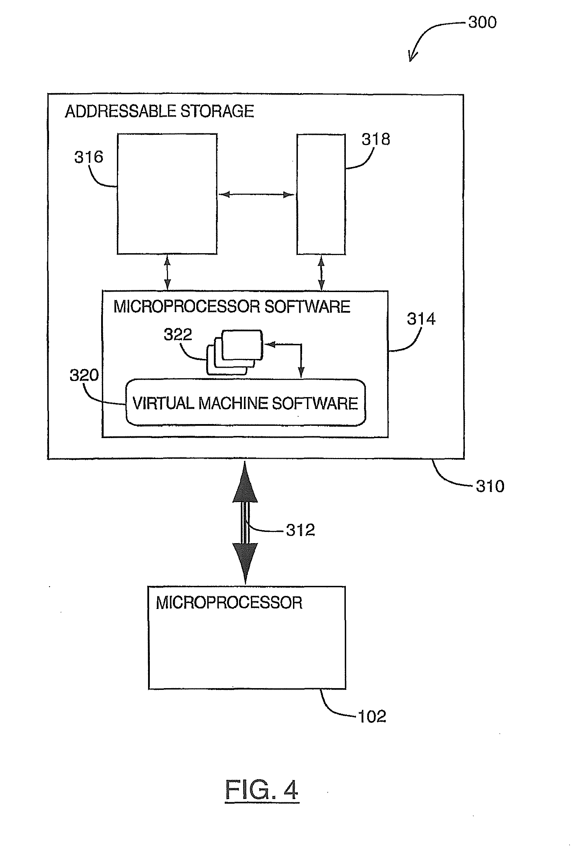

However, in one example system implemented on a mobile device (e.g. mobile device 100 of FIG. 1), data is nonetheless swappable between RAM 106 (FIG. 1) and flash memory 108 (FIG. 1). These memory components collectively comprise addressable storage on the mobile device. Referring to FIG. 4, a high-level schematic diagram illustrating a number of components of the system that includes the addressable storage is shown generally as 300. System 300 includes a microprocessor 102, and an addressable storage 310 connected to microprocessor 102 by a data bus 312. The addressable storage 310 stores microprocessor software modules 314 (e.g. operating system software), a heap 316, and a reference table 318. In this example system, the operating system does not manage the swapping of data in and out of RAM, as the operating system on a personal computer typically would. Instead, virtual machine software 320 provided on the mobile device 100 is adapted to swap data records in and out of RAM in system 300. For example, the virtual machine software 320 is adapted to load data records from flash memory into RAM so that they can be modified, and then to save the data records from RAM back to flash memory for persistent storage. As will be understood by persons skilled in the art, the virtual machine software 320 implements a virtual machine (e.g. a Java™ virtual machine) that runs on top of a hardware platform and operating system (in this case, that of mobile device 100). The virtual machine is capable of interpreting virtual machine instructions found in application or program modules 322, allowing programs typically written in an associated programming language (e.g. Java) to run on that hardware.

In this example system, the virtual machine may be adapted to swap data out of RAM temporarily into flash memory to free space in RAM, thereby providing virtual memory capabilities.

Data may also be swapped out of RAM to flash memory by the virtual machine so that the data may be more permanently stored. An embodiment of a method of managing memory to prevent the swapping out of sensitive data to non-volatile storage such as flash memory can be implemented in this system on a mobile device, through this virtual machine.

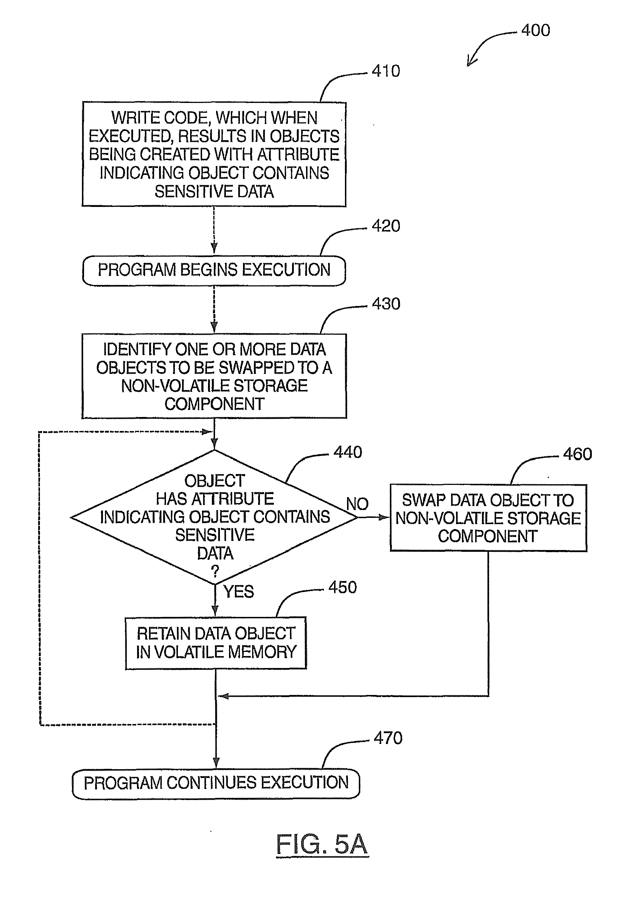

Referring to FIG. 5A, a flowchart illustrating steps in a method of managing memory in a mobile device in one embodiment is shown generally as 400.

At step 410, the source code of a program to be executed on the mobile device (e.g. mobile device 100 of FIG. 1) is initially written by one or more programmers. The programmer is permitted to write code, which when executed, results in the creation of objects, each having a "RAM-only" attribute that indicates that the respective object is to contain sensitive data. For example, a special "RAM-only" attribute may be associated with an object and can be assigned a Boolean value to indicate (e.g. to a memory management component in the run-time environment as discussed below) whether or not that object is to be swapped out to non-volatile storage from RAM. In this way, objects can be marked as for containing sensitive data at the programming stage, such that when the program is executed, data can be stored in those objects to protect the data from being swapped out of RAM.

Subsequently, at run-time, a memory management component on the mobile device, in the course of the program's execution (initiated at step 420), attempts to swap out one or more data objects in a volatile memory to non-volatile storage. This may be initiated, for example, to temporarily free up space in the volatile memory on the mobile device. In one example system as described with reference to FIG. 4, the memory management component adapted to perform such memory management functions is a virtual machine on the mobile device (e.g. implemented by virtual machine software 320 of FIG. 4). This virtual machine is adapted to swap data objects from volatile memory (e.g. RAM 106 of FIG. 1) to non-volatile storage (e.g. flash memory 108 of FIG. 1). Accordingly, at step 430, the virtual machine identifies one or more data objects in volatile memory that it intends to swap to a non-volatile storage component. However, in accordance with this method, the virtual machine is adapted to first check if the data objects have been marked as containing sensitive data before the data objects are swapped out to the non-volatile storage component.

Accordingly, at step 440, a data object intended to be swapped out to the non-volatile storage component is checked not only for the presence of the "RAM-only" attribute but also that the attribute has been assigned a value indicating that the object is not to be swapped out to non-volatile storage. If the attribute is present and has been assigned such a value, then the data object is retained in the volatile memory of the mobile device at step 450, such that the data object is not swapped out to the non-volatile storage component. On the other hand, if the attribute is not present in the data object, or the attribute is present but has not been assigned a value indicating that the data object is not to be swapped out to non-volatile storage, then the memory management component may proceed to swap out the object to the non-volatile storage component at step 460.

The steps of the method may be repeated from step 440 if there is more than one data object that the memory management component intends to swap out to the non-volatile storage component. Data objects need not be swapped out individually to the non-volatile storage after being checked. It will be understood by persons skilled in the art that the memory management component may check multiple data objects for the presence of the "RAM-only" attribute and the value thereof before data objects are swapped to the non-volatile storage component. Program execution continues at step 470.

In variant embodiments of the method, alternate techniques may be used to mark data objects as containing sensitive data, to control which data objects will not be swapped out to non-volatile memory.

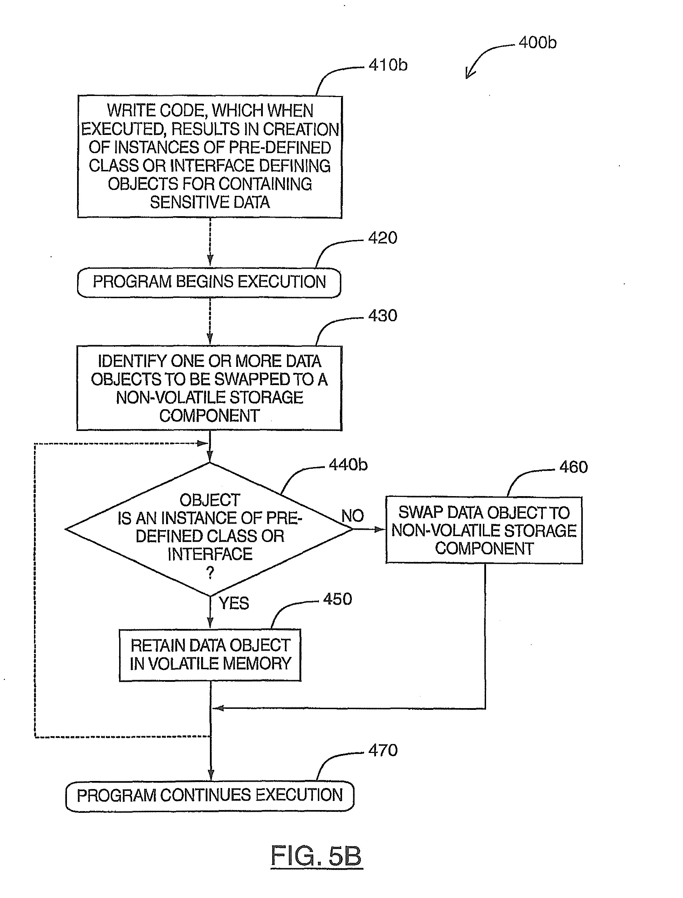

For example, referring now to FIG. 5B, a flowchart illustrating steps in a method of managing memory in a mobile device in another embodiment is shown generally as 400b. Method 400b is similar to method 400, except that a special pre-defined class or interface that defines an implementation for objects that are to contain sensitive data is used to mark objects at the programming stage. This allows programmers to write code, which when executed, results in the creation of instances of the special class or interface. The memory management component is adapted to detect objects that are instances of the special class or interface, and not to swap such objects out to non-volatile storage. When the program is executed, data can be stored in those objects to protect the data from being swapped out of RAM to a non-volatile storage component. Steps 410b and 440b of method 400b reflect this variant marking technique.

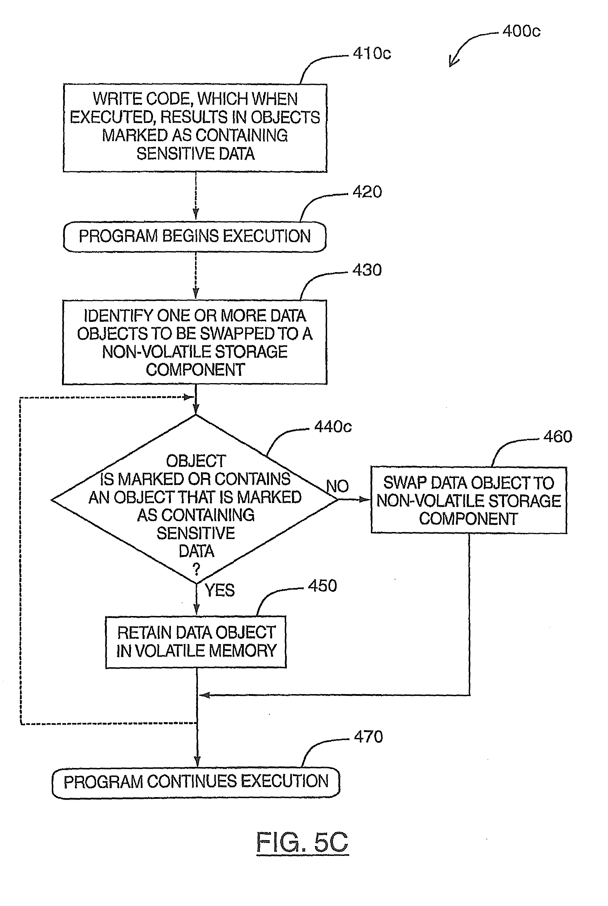

Referring now to FIG. 5C, a flowchart illustrating steps in a method of managing memory in a mobile device in another embodiment is shown generally as 400c. Method 400c can be applied to both of the above methods. In method 400c, the memory management component is adapted to check (possibly in a recursive manner) whether objects, which themselves may not be marked as "RAM-only", contain other objects that have been marked as "RAM-only". In this embodiment, any object that contains a "RAM-only" object will also be deemed to be "RAM-only" itself, and will not be swapped out to non-volatile storage.

In a variant embodiment of the invention, certain functions are defined as sensitive, such that any objects (e.g. encryption keys) that get passed as parameters to such functions would automatically be marked as "RAM-only".

While some of the embodiments of the systems and methods described herein refer generally to the management of data that may potentially be swapped to a non-volatile storage component (e.g. flash memory) residing on the mobile device, it will be understood that in certain system configurations, the non-volatile storage component, to which data may be swapped out from a volatile memory on the mobile device, may be a remote component not residing on the mobile device itself.

Furthermore, some of the examples provided herein have been described with reference to a virtual machine as the memory management component that has been adapted to perform certain steps of methods of managing memory in a mobile device. However, in variant embodiments, the memory management component adapted to perform these memory management functions is an operating system executing on the mobile device.

The examples provided herein have been primarily described, by way of example, with reference to mobile devices. However, in variant examples, at least some of the systems and methods described herein may be employed on other computing devices.

The steps of a method of managing memory in a mobile device described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A method of managing memory in a mobile device (100) to prevent the swapping out of sensitive data to non-volatile storage (108) during the execution of one or more programs on the mobile device, the method comprising the steps of:
identifying (430) one or more data objects stored in a volatile memory (106) on the mobile device (100) to be swapped out to a non-volatile storage component (108);
determining (440) a first subset of the one or more data objects, wherein each data object belonging to the first subset has been marked as containing sensitive data and attribute data has been stored in the data object to protect the data stored in the data object from being swapped out of the volatile memory (106); and
retaining (450) the first subset of data objects in the volatile memory of the mobile device, such that the first subset of data objects is not swapped out to the non-volatile storage component (108) when a memory management component on the mobile device attempts to swap out one or more data objects of the first subset from the volatile memory to the non-volatile storage component.

2. The method of claim 1, further comprising the step of swapping (460) at least one data object not in the first subset out to the non-volatile storage component (108).

3. The method of claim 1 or claim 2, wherein the non-volatile storage component (108) resides on the mobile device (100).

4. The method of any one of claims 1 to 3, wherein a data object of the one or more data objects is determined to belong to the first subset in the determining step (440) for any one of:
if the data object contains an attribute having a value that indicates that the object has been marked as containing sensitive data; or
if the data object is determined to be an instance of a class or an interface that defines an implementation for objects that are to contain sensitive data.

5. The method of any one of claims 1 to 3, wherein a data object is considered as being marked as containing sensitive data if it is passed as a parameter into a sensitive function.

6. The method of any one of the preceding claims, wherein a data object is considered as being marked as containing sensitive data if at least one of the following conditions is true:
the data object itself is marked as containing sensitive data;
the data object contains a second data object, where the second data object is marked as containing sensitive data.

7. A computer program product comprising a plurality of instructions stored on a computer-readable medium, the instructions for causing a mobile device (100) to perform a method of managing memory as claimed in any one of the preceding claims.

8. A system (300) for managing memory in a mobile device (100) to prevent the swapping out of sensitive data to non-volatile storage (108) during the execution of one or more programs on the mobile device, the system comprising:
a processor (102);
a volatile memory (106) coupled to the processor;
a non-volatile storage component (108) coupled to the processor;
a memory management component that is operable to control the swapping of data objects between the volatile memory and the non-volatile storage component during the execution of the one or more programs by the processor; wherein the memory management component is adapted to perform the method of any one of claims 1 to 6.

9. The system of claim 8, wherein the memory management component is implemented in a virtual machine on the mobile device (100).

## Patentansprüche

1. Ein Verfahren zum Verwalten von Speicher in einer mobilen Vorrichtung (100), um das Auslagern von sensiblen Daten in einen nichtflüchtigen Speicher (108) während der Ausführung eines Programms oder mehrerer Programme auf der mobilen Vorrichtung zu verhindern, wobei das Verfahren die Schritte aufweist:
Identifizieren (430) eines Datenobjekts oder mehrerer Datenobjekte, das/die in einem flüchtigen Speicher (106) auf der mobilen Vorrichtung (100) gespeichert ist/sind, das/die zu einer nichtflüchtigen Speicherkomponente (108) ausgelagert wird/werden;
Bestimmen (440) eines ersten Teilsatzes des einen Datenobjekts oder mehrerer Datenobjekte, wobei jedes Datenobjekt, das zu dem ersten Teilsatz gehört, als sensible Daten enthaltend markiert wurde, und Attributdaten in dem Datenobjekt gespeichert wurden, um die Daten, die in dem Datenobjekt gespeichert sind, vor einem Auslagern aus dem flüchtigen Speicher (106) zu schützen; und
Halten (450) der ersten Teilsatzes von Datenobjekten in dem flüchtigen Speicher der mobilen Vorrichtung derart, dass der erste Teilsatz von Datenobjekten nicht an die nichtflüchtige Speicherkomponente (108) ausgelagert wird, wenn eine Speicherverwaltungskomponente auf der mobilen Vorrichtung versucht, ein oder mehrere Datenobjekt(e) des ersten Teilsatzes aus dem flüchtigen Speicher zu der nichtflüchtigen Speicherkomponente auszulagern.

2. Das Verfahren gemäß Anspruch 1, das weiter aufweist den Schritt eines Auslagerns (460) zumindest eines Datenobjekts, das nicht in dem ersten Teilsatz ist, zu der nichtflüchtigen Speicherkomponente (108).

3. Das Verfahren gemäß Anspruch 1 oder Anspruch 2, wobei sich die nichtflüchtige Speicherkomponente (108) auf der mobilen Vorrichtung (100) befindet.

4. Das Verfahren gemäß einem der Ansprüche 1 bis 3, wobei ein Datenobjekt des einen Datenobjekts oder der mehreren Datenobjekte in dem Bestimmungsschritt (440) als zu dem ersten Teilsatz gehörend bestimmt wird für eines aus:
wenn das Datenobjekt ein Attribut mit einem Wert enthält, der angibt, dass das Objekt als sensible Daten enthaltend markiert wurde; oder
wenn bestimmt wird, dass das Datenobjekt eine Instanz einer Klasse oder einer Schnittstelle ist, die eine Implementierung für Objekte definiert, die sensible Daten enthalten werden.

5. Das Verfahren gemäß einem der Ansprüche 1 bis 3, wobei ein Datenobjekt als markiert als sensible Daten enthaltend betrachtet wird, wenn es als ein Parameter in eine sensible Funktion geleitet wird.

6. Das Verfahren gemäß einem der vorhergehenden Ansprüche, wobei ein Datenobjekt als markiert als sensible Daten enthaltend betrachtet wird, wenn zumindest eine der folgenden Bedingungen wahr ist:
das Datenobjekt selbst ist markiert als sensible Daten enthaltend;
das Datenobjekt enthält ein zweites Datenobjekt, wobei das zweite Datenobjekt als sensible Daten enthaltend markiert ist.

7. Ein Domputerprogrammprodukt, das eine Vielzahl von Anweisungen aufweist, die auf einem computerlesbaren Medium gespeichert sind, wobei die Anweisungen vorgesehen sind zum Veranlassen einer mobilen Vorrichtung (100), ein Verfahren zum Verwalten von Speicher gemäß einem der vorhergehenden Ansprüche durchzuführen.

8. Ein System (300) zum Verwalten von Speicher in einer mobilen Vorrichtung (100), um das Auslagern von sensiblen Daten zu einem nichtflüchtigen Speicher (108) während der Ausführung eines Programms oder mehrerer Programme auf der mobilen Vorrichtung zu verhindern, wobei das System aufweist:
einen Prozessor (102);
einen flüchtigen Speicher (106), der mit dem Prozessor gekoppelt ist;
eine nichtflüchtige Speicherkomponente (108), die mit dem Prozessor gekoppelt ist;
eine Speicherverwaltungskomponente, die betriebsfähig ist zum Steuern des Auslagerns von Datenobjekten zwischen dem flüchtigen Speicher und der nichtflüchtigen Speicherkomponente während der Ausführung des einen Programms oder der mehreren Programme durch den Prozessor; wobei die Speicherverwaltungskomponente ausgebildet ist zum Durchführen des Verfahrens gemäß einem der Ansprüche 1 bis 6.

9. Das System gemäß Anspruch 8, wobei die Speicherverwaltungskomponente in einer virtuellen Maschine auf der mobilen Vorrichtung (100) implementiert ist.

## Revendications

1. Procédé de gestion de mémoire dans un dispositif mobile (100) pour empêcher le transfert de données sensibles vers un composant de stockage non volatil (108) pendant l'exécution d'un ou de plusieurs programme(s) sur le dispositif mobile, le procédé comprenant les étapes qui consistent :
à identifier (430) un ou plusieurs objet(s) de données stocké(s) dans une mémoire volatile (106) sur le dispositif mobile (100) devant être transféré(s) vers un composant de stockage non volatil (108) ;
à déterminer (440) un premier sous-ensemble de l'objet ou des plusieurs objets de données, où chaque objet de données appartenant au premier sous-ensemble a été marqué comme contenant des données sensibles et des données d'attributs ont été stockées dans l'objet de données pour protéger les données stockées dans l'objet de données contre le transfert à partir de la mémoire volatile (106) ; et
à maintenir (450) le premier sous-ensemble d'objets de données dans la mémoire volatile du dispositif mobile, de sorte que le premier sous-ensemble d'objets de données ne soit pas transféré au composant de stockage non volatil (108) lorsqu'un composant de gestion de mémoire sur le dispositif mobile tente de transférer un ou plusieurs objet(s) de données du premier sous-ensemble de la mémoire volatile au composant de stockage non volatil.

2. Procédé de la revendication 1, comprenant en outre l'étape qui consiste à transférer (460) au moins un objet de données qui n'est pas dans le premier sous-ensemble vers le composant de stockage non volatil (108).

3. Procédé de la revendication 1 ou 2, dans lequel le composant de stockage non volatil (108) réside sur le dispositif mobile (100).

4. Procédé de l'une quelconque des revendications 1 à 3, dans lequel un objet de données parmi le ou les plusieurs objet(s) de données est/sont déterminé(s) comme appartenant au premier sous-ensemble dans l'étape de détermination (440) pour l'une quelconque des conditions suivantes :
si l'objet de données contient un attribut ayant une valeur qui indique que l'objet a été marqué comme contenant des données sensibles ; ou
si l'objet de données est déterminé comme étant une instance d'une classe ou d'une interface qui définit une implémentation pour des objets qui doivent contenir des données sensibles.

5. Procédé de l'une quelconque des revendications 1 à 3, dans lequel un objet de données est considéré comme étant marqué comme contenant des données sensibles s'il est adopté en tant que paramètre dans une fonction sensible.

6. Procédé de l'une quelconque des revendications précédentes, dans lequel un objet de données est considéré comme étant marqué comme contenant des données sensibles si au moins l'une des conditions suivantes est vraie :
l'objet de données lui-même est marqué comme contenant des données sensibles ;
l'objet de données contient un deuxième objet de données, où le deuxième objet de données est marqué comme contenant des données sensibles.

7. Produit de programme informatique comprenant une pluralité d'instructions stockées sur un support lisible par ordinateur, les instructions permettant d'amener un dispositif mobile (100) à effectuer un procédé de gestion de mémoire tel que revendiqué dans l'une quelconque des revendications précédentes.

8. Système (300) de gestion de mémoire dans un dispositif mobile (100) pour empêcher le transfert de données sensibles vers un composant de stockage non volatil (108) pendant l'exécution d'un ou de plusieurs programme(s) sur le dispositif mobile, le système comprenant :
un processeur (102) ;
une mémoire volatile (106) couplée au processeur ;
un composant de stockage non volatil (108) couplé au processeur ;
un composant de gestion de mémoire qui peut fonctionner pour commander le transfert d'objets de données entre la mémoire volatile et le composant de stockage non volatil pendant l'exécution du ou des plusieurs programme(s) par le processeur ; dans lequel le composant de gestion de mémoire est adapté pour mettre en oeuvre le procédé de l'une quelconque des revendications 1 à 6.

9. Système de la revendication 8, dans lequel le composant de gestion de mémoire est installé dans une machine virtuelle sur le dispositif mobile (100).
